Europäisches Patentamt

European Patent Office

Office européen des brevets

(11) Numéro de publication: **0 201 392**
**B1**

(12) **FASCICULE DE BREVET EUROPEEN**

(45) Date de publication du fascicule du brevet:
**26.07.89**

(21) Numéro de dépôt: **86400839.6**

(22) Date de dépôt: **18.04.86**

(51) Int. Cl.⁴: **F16L 33/08**

(54) Collier de fixation à vis.

(30) Priorité: **07.05.85 FR 8506958**

(43) Date de publication de la demande:
**17.12.86 Bulletin 86/46**

(45) Mention de la délivrance du brevet:
**26.07.89 Bulletin 89/30**

(84) Etats contractants désignés:
**AT BE CH DE GB IT LI LU NL SE**

(56) Documents cités:
**DE-C- 465 944**
**US-A- 2 002 141**
**US-A- 3 162 921**

(73) Titulaire: **Etablissements CAILLAU, 28, rue Ernest
Renan, F-92130 Issy-les-Moulineaux(FR)**

(72) Inventeur: **Calmettes, Lionel, Aliée près du Bourg
Cidex 1648 - No. 6, F-41200 Romorantin(FR)**

(74) Mandataire: **Descourtieux, Philippe et al, CABINET
BEAU de LOMENIE 55 rue d'Amsterdam,
F-75008 Paris(FR)**

## Description

On connaît déjà, notamment par le brevet US-A 3 162 921 de nombreux types de colliers de fixation comportant une bande généralement métallique, enroulée sur elle-même, présentant des rainures transversales destinées à coopérer avec les filets d'une vis montée pivotante dans une cosse fixée à l'une des extrémités de la bande. De tels collier sont utilisé par exemple pour assurer la fixation d'accessoires sur les tuyaux d'arrosage ou le serrage de conduits souples sur les tubes rigides.

La cosse recevant la vis de serrage peut présenter diverses caractéristiques en fonction de l'utilisation prévue: dans certains cas, qui seront concernés par la présente invention, la cosse est une pièce rigide présentant deux pattes rabattables. Au cours de la fabrication du collier, la cosse préalablement mise en forme et ayant reçu sa vis est montée à cheval sur une bande métallique enroulée sur elle-même, au voisinage de l'extrémité du brin intérieur de la bande. Les pattes rabattables sont alors repliées sous ce brin intérieur et coopèrent avec un pli convenable de ce brin pour assurer sa fixation par rapport à la cosse et empêcher son déplacement au cours du serrage. Après cette opération, les rainures transversales du brin extérieur de la bande sont en prise avec les filets de la vis et ce brin extérieur peut donc se déplacer par rapport au brin intérieur lorsqu'on manœuvre la vis.

Ce genre de collier présente toutefois quelques inconvénients lorsque le tube à serrer est de faible diamètre, par exemple voisin de 10 mm, et que simultanément l'effort de serrage important exige une bande réalisée en un métal, tel qu'un acier résistant et quelquefois relativement rigide.

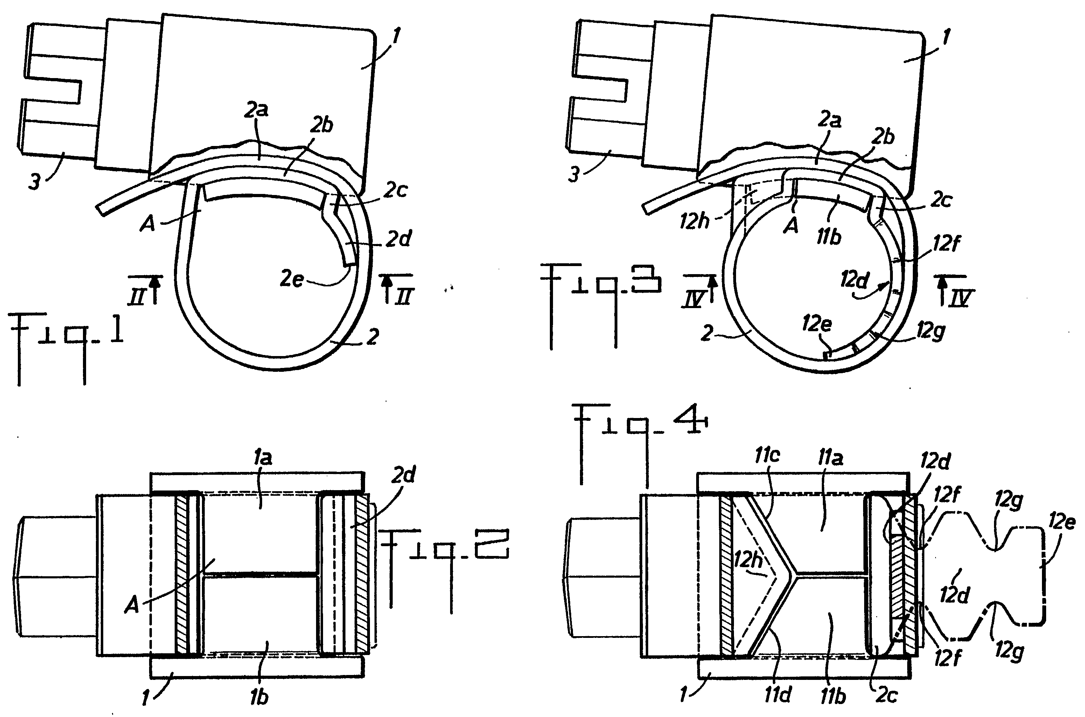

Pour expliquer ces inconvénients qui donnent lieu à des fuites et mêmes à ses détériorations du tube souple sur lequel le collier est serré, il apparaît nécessaire de se reporter aux figures 1 et 2 du dessin joint en annexe. Elles représentent un collier du type qui vient d'être décrit, la figure 1 étant une vue de côté d'un tel collier, cependant que la figure 2 est une couple suivant II–II de la figure 1.

La référence 1 désigne la cosse du collier montée à cheval sur la zone de recouvrement des deux brins 2a et 2b de la bande 2, les pattes 1a et 1b de la cosse étant rabattues pour assurer la fixation du brin intérieur 2b grâce à son pli 2c. Les filets de la vis 3 montée dans la cosse 1 coopèrent avec des rainures transversales prévues sur une partie au moins du brin extérieur 2a.

Il est évidemment nécessaire d'assurer un portage continu du collier sur toute la périphérie du tube à serrer pour éviter les risques de fuites. A cet effet, le brin intérieur 2b de la bande est pronlongé au-delà de son pli 2c par une bavette 2d. Toutefois, dans les réalisations connues, la bavette 2d est relativement courte et, si le métal de la bande est peu souple, son bord terminal 2e vient frotter et quelquefois s'ancrer, au cours du serrage, sur la face interne du brin extérieur 2a. Il en résulte que le couple à exercer sur la vis 3 devient rapidement très important, laissant croire à l'opérateur que le collier est normalement serré alors qu'il ne l'est pas encore.

D'autre part, on se rend facilement compte, à l'examen de la figure 1, que le portage du collier sur le tube à serrer a toutes chances d'être défectueux dans la zone repérée A des pattes rabattues 1a et 1b, située à l'opposé du pli 2c.

Là encore ces colliers connus présentent l'inconvénient de laisser subsister des zones où des fuites peuvent se produire.

On connaît cependant un autre type de collier décrit par le brevet US-A 2 002 141. Pour permettre d'adapter facilement le diamètre du collier à celui de l'objet à serrer, il est prévu une "chaussure" dont le rôle est analogue à celui de la cosse des colliers précédemment décrits et qui est assujettie de façon réglable à la bande. A cet effet, cette dernière présente de petites encoches, régulièrement réparties sur les bords longitudinaux d'une partie de la bande, qui ne modifient pas sensiblement la rigidité de la bande. D'autre part, le problème, évoqué plus haut, du portage continu du collier sur toute sa périphérie, est moins crucial que dans les autres colliers, en raison de la forme particulière de la "chaussure".

La présente invention a pour objet un collier du genre de celui qui a été décrit en référence au brevet US-A 3 163 921 et aux figures 1 et 2. Un tel collier est cependant perfectionné de façon à améliorer son portage sur la périphérie du tube souple à serrer et à éviter ainsi l'apparition desfuites.

Selon l'invention, la bavette prolongeant le brin intérieur de la bande au-delà du pli de fixation comporte des bords longitudinaux présentant une forme crénelée, les créneaux étant suffisamment profonds pour constituer des zones de moindre résistance de la bavette. Grâce à cette disposition, il est facile à la bavette d'épouser approximativement la forme de la face interne du brin extérieur de la bande sans risquer de s'y accrocher au cours du serrage du collier.

D'autre part, la distance entre le pli de fixation et le premier créneau, ainsi que la distance entre les créneaux successifs, seront avantageusement inférieures à la moitié de la largeur de la bande et, de préférence, voisines du tiers de cette largeur.

L'invention sera mieux comprise et diverses autres caractéristiques apparaîtront au cours de la description qui va suivre d'un mode de réalisation avantageux en référence aux dessins annexés dans lesquels les figures 3 et 4 sont des vues, analogues aux figures 1 et 2, d'un collier perfectionné selon l'invention.

Les éléments du collier déjà décrits en référence aux figures 1 et 2 sont désignés par les mêmes repères dans la mesure où ils ne sont pas modifiés. Au contraire, les éléments nouveaux ou modifiés comportent des repères augmentés de 10.

Si l'on se reporte aux dessins, on voit que la bavette 12d s'étend depuis le pli 2c sur une longueur relativement importante ; son extrémité libre 12e est de préférence légèrement amincie. Mais surtout, ainsi qu'on le voit bien sur la figure 4, ses bords longitudinaux sont crénelés. Pour faciliter le dessin et la compréhension, on a représenté la bavette 12d à plat en trait ponctué en supposant qu'elle est redressée à partir du pli 2c. La distance entre le pli 2c et le premier créneau 12f est aussi faible que possible et en tout cas inférieure à la moitié de la largeur de la bande, de préférence inférieure au tiers de cette largeur. Il en est de même de la distance entre le créneau 12f et le créneau 12g ainsi qu'entre ce dernier et l'extrémité libre 12c de la bavette. De préférence, ainsi qu'on le voit également sur la figure 4, la largeur maximale de la bavette est inférieure à celle de la bande entre les créneaux 12f et 12g ainsi qu'au niveau de l'extrémité 12e.

D'autre part, les pattes rabattues 11a et 11b présentent avantageusement des bords latéraux 11c et 11d, situés à l'opposé du pli 2c, qui sont inclinés vers ce pli 2c depuis la région de leur pliage et de leur raccordement à la cosse 1. La largeur des pattes dans l'axe de la bande est donc inférieure à la largeur initiale, ce qui permet de loger dans la zone A un soyage 12h réalisé dans le brin intérieur de la bande, du côté opposé au pli 2c, et de rétablir ainsi une continuité entre la face interne des pattes 11a et 11b et la face interne de la bande destinées à venir en contact avec le tube souple à serrer (figure 3).

Au cours du serrage du collier, les créneaux de la bavette 12d constituent des zones de moindre résistance de sorte que la bavette épouse facilement le profil de la face interne du brin 2a de la bande sans risquer de s'y accrocher. Le couple de serrage appliqué à la vis 3 est alors représentatif du serrage du tube souple, les frottements de la bavette facilement déformable sur le brin extérieur étant réduits.

Ainsi, le collier peut pénétrer suffisamment dans la paroi du tube souple à serrer pour que les faibles imperfections de la continuité de sa face interne soient absorbées et que les risques de fuites soient totalement évités. Ceci est bien évidemment facilité par la diminution de la zone A grâce à la forme particulière des bords latéraux 11c et 11d des pattes et du soyage 12h de la bande.

### Revendications

1. Collier de serrage constitué par une bande (2) de métal enroulée sur elle-même et présentant des nervures transversales destinées à coopérer avec les filets d'une vis (3) montée pivotante dans une cosse (1) fixée au voisinage de l'extrémité du brin intérieur (2b) de la bande, au moyen de pattes – (11a, 11b) rabattues sous ladite extrémité et sur lesquelles s'appuie un pli (2c) du brin intérieur, cependant qu'au-delà de ce pli le brin intérieur comporte une bavette (12d) destinée à assurer une continuité au moins approximative de la face interne du collier destinée à venir en contact avec un tube souple à serrer, caractérisé en ce que la bavette (12d) présente des bords longitudinaux crénelés, les créneaux (12f, 12g) étant suffisamment profonds pour constituer des zones de moindre résistance de la bavette lui permettant de fléchir pour épouser la forme de la bande (2).

2. Collier selon la revendication 1, caractérisé en ce que la distance entre le pli (2c) et le premier créneau (12f) de la bavette (12d) ainsi qu'entre les créneaux (12f, 12g) successifs est inférieure à la moitié de la largeur de la bande et de préférence, voisine du tiers de cette largeur.

3. Collier selon la revendication 2, caractérisé en ce que la largeur maximale entre deux créneaux successifs (12f, 12g) de la bavette est inférieure à la largeur de la bande.

4. Collier selon la revendication 2, caractérisé en ce que les bords latéraux (11c, 11d) des pattes – (11a, 11b) de la cosse (1), situées de côté opposé au pli (2c) de la bande, sont inclinés, depuis leur zone de pliage, vers ledit pli (2c), de sorte que la largeur desdites pattes au voisinage du milieu de la bande est inférieure à leur largeur dans leur zone de pliage, cependant que le brin intérieur (2b) de la bande présente un soyage (12h) se logeant dans l'espace ainsi laissé libre par les bords latéraux inclinés des pattes (11a, 11b).

### Patentansprüche

1. Schlauchklemme, gebildet durch ein aufgerolltes Metallband (2) mit Querrippen zum Zusammenwirken mit dem Gewinde einer Schraube (3), die in einer nahe dem Ende des inneren Trums (2b) des Bandes befestigten Hülse (1) drehbar montiert ist, mittels Pratzen (11a, 11b), die unter besagtem Ende umgeschlagen sind und auf denen sich eine Falte (2c) des inneren Trums abstützt, wogegen das innere Trum jenseits dieser Falte eine Klappe (12d) zur Gewährleistung einer zumindest annähernden Kontinuität der Innenfläche der Schlauchklemme, die in Kontakt mit einem festzuklemmenden Schlauch kommen soll, umfaßt dadurch gekennzeichnet, daß die Klappe (12d) gezackte Längsränder aufweist, wobei die Scharten (12f, 12g) ausreichend tief sind, um Klappenzonen von geringstem Widerstand zu bilden, die ein Biegen derselben zwecks Annehmens der Form des Bandes (2) gestatten.

2. Schlauchklemme nach Anspruch 1, dadurch gekennzeichnet, daß der Abstand zwischen der Falte (2c) und der ersten Scharte (12f) der Klappe (12d) sowie zwischen den aufeinanderfolgenden Scharten (12f, 12g) geringer als die Hälfte der Breite des Bandes, vorzugsweise nahezu ein Drittel dieser Breite, ist.

3. Schlauchklemme nach Anspruch 2, dadurch gekennzeichnet, daß die maximale Breite zwischen zweit aufeinanderfolgenden Scharten (12f, 12g) der Klappe geringer ist als die Breite des Bandes.

4. Schlauchklemme nach Anspruch 1, dadurch gekennzeichnet, daß die Seitenränder (11c, 11d) der Pratzen (11a, 11b) der Hülse (1), die sich auf der gegenüberliegenden Seite der Falte (2c) des Bandes befinden, ab ihrer Faltzone zur Falte (2c) hin derart geneigt sind, daß die Breite der Pratzen nahe der Mittel des Bandes geringer ist als ihre Breite in der Faltzone, während das innere Trum (2b) des Bandes einen Durchzug (12h) aufweist, der sich in dem so von den geneigten Seitenrändern der Pratzen (11a, 11b) freigelassenen Raum befindet.

### Claims

1. Clamp constituted by a metal band (2) wound on itself and provided with transversal ribs designed to cooperate with the threading of a screw (3) mounted for pivoting in a socket piece (1) fixed close to the end of the inner end portion (2b) of the band, by means of tabs (11a, 11b) bent in under said end and on which tabs rest a bent part (2c) of the band inner end portion, whereas beyond said bent part, the inner end comprises a flap (12d) designed to ensure at least an approximative continuity of the inner face of the clamp which is designed to come into contact with a flexible tube for damping, characterized in that the flap (12d) has notched longitudinal edges, the notches (12f, 12g) being deep enough to constitute zones of lesser strength in the flap, thus enabling the latter to bend in order to adopt the shape of the band (2).

2. Clamp according to claim 1, characterized in that the distance between the bent part (2c) and the first notch (12f) of the flap (12d) as well as between thesuccessive notches (12f, 12g) is less than half the width of the band and preferably close to one third of that width.

3. Clamp according to claim 2, characterized in that the maximum width between two successive notches (12f, 12g) of the flap is less than the width of the band.

4. Clamp according to claim 1, characterized in that the side edges (11c, 11d) of the tabs (11a, 11b) of the socket piece (1), which are situated on the side opposite to the bent part (2c) of the band, are inclined, from their bending zone, toward said bent part (2c), so that the width of said tabs close to the middle of the band is less than theri width in their bending zone, whereas the inner end (2b) of the band is provided with a bur (12h) fitting in the gap created by the inclined side edges of the tabs (11a, 11b).

EP 0 201 392 B1

Fig.1

Fig.2

Fig.3

Fig.4